# EUROPEAN PATENT SPECIFICATION

(11) **EP 0 396 087 B1**
(45) Date of publication and mention of the grant of the patent: **29.09.1993**
(21) Application number: 90108239.6
(22) Date of filing: 30.04.1990
(51) Int. Cl.: B60S 1/04

(54) **Vehicle provided with a device for housing a window wiper in a totally concealed manner**
Fahrzeug mit einer Vorrichtung, um einen Scheibenwischer vollständig verborgen unterzubringen
Véhicule muni d'un dispositif pour loger un essuie-glace de façon complètement cachée

(30) Priority: 03.05.1989 IT 6732089
(43) Date of publication of application: 07.11.1990
(73) Proprietor: FIAT AUTO S.p.A., 10135 Torino (IT)
(72) Inventor: Pilone, Giuseppe, I-10100 Torino (IT)
(74) Representative: Jorio, Paolo

(56) References cited:
- EP-A- 0 302 499
- DE-A- 3 437 556
- US-A- 3 120 673
- US-A- 4 756 568
- US-A- 4 770 462

## Description

This invention relates to a vehicle provided with a device for housing a window wiper, of any known type, in a totally concealed manner.

The presence of a window wiper, in particular that for the vehicle front windscreen, on the one hand involves sudden interruption of the stylistic line of the vehicle at the transition between the hood and windscreen, and on the other hand creates an aerodynamic obstacle to the air flow produced by the advancement of the vehicle, which especially at high running speeds (for example from 90 km/h upwards) can produce both a resistance to its advancement with reduction in the vehicle CX and consequent greater fuel consumption, and in particular disturbing noise.

Although these drawbacks have been reduced in vehicles of most recent construction by suitably shaping that edge of the hood adjacent to the windscreen and housing the windscreen wiper so that it is shielded as far as possible by the hood when at rest, they have not however been eliminated.

From EP-A 0302499 it also known a vehicle in which the wiper is shielded by means of a suitably shaped movable panel, which is displaced away the wiper when the latter is in use. Nevertheless the displacing device, based on a lever system, is complex and expensive to produce.

The object of the invention is to provide a vehicle which comprises a known window wiper but is free of the stated drawbacks, i.e. in which total aesthetic and and aerodynamic screening can be obtained in a simple and economical manner for the window wiper when at rest.

Said object is attained according to the invention by a vehicle comprising a window wiper of the type disclosed in EP-A-0 302 499 and as defined in Claim 1.

Further developments in line with claim 1 are referred to in the dependent claims.

The invention will be more apparent from the non-limiting description of one embodiment thereof given hereinafter with reference to the accompanying drawings in which:
Figure 1 is a partial top plan view of a vehicle constructed in accordance with the invention;
Figure 2 is a sectional side elevation of a detail of the vehicle of Figure 1 to an enlarged scale;
Figure 3 is a section on the line III-III of the detail of Figure 2; and
Figure 4 is a top plan view, to an enlarged scale, of a further detail of the vehicle of Figure 1.

In said figures the reference numeral 1 indicates overall a vehicle, which in the particular case shown is a motor vehicle, comprising a body 2 defining a passenger's compartment 3 and an engine compartment 4, which is bounded respectively by a window 5 defining the vehicle front windscreen, and a hood 6. The windscreen is provided with a windscreen wiper 8 of any known type comprising at least one rotary arm 9 driven reciprocatingly by a motor 10 and carrying at one end a wiper member or blade 11 arranged to sweep the windscreen 5 in order to clean it.

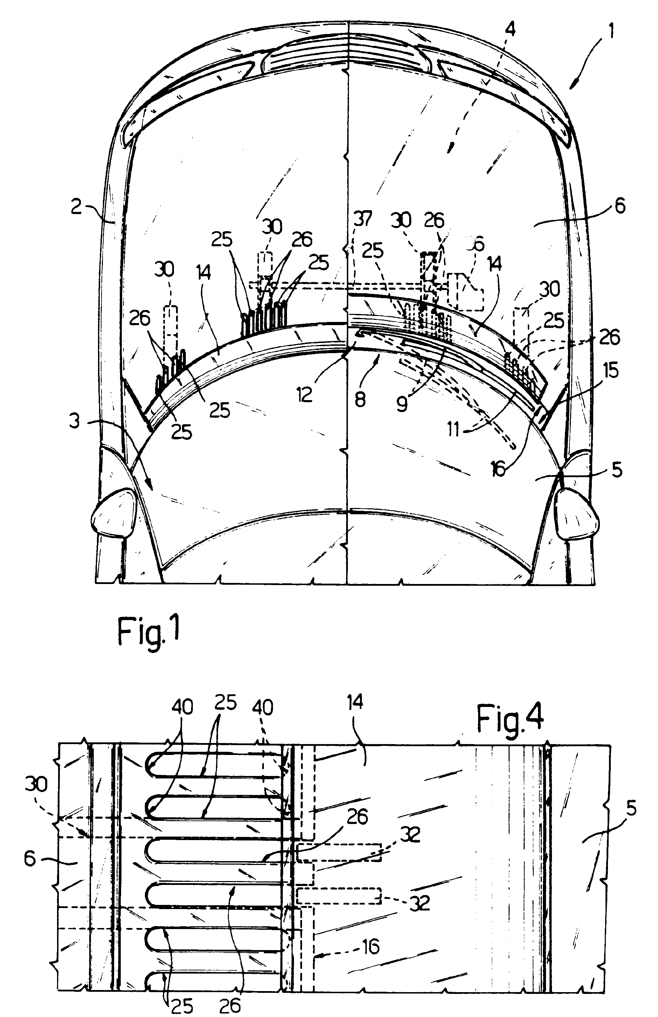

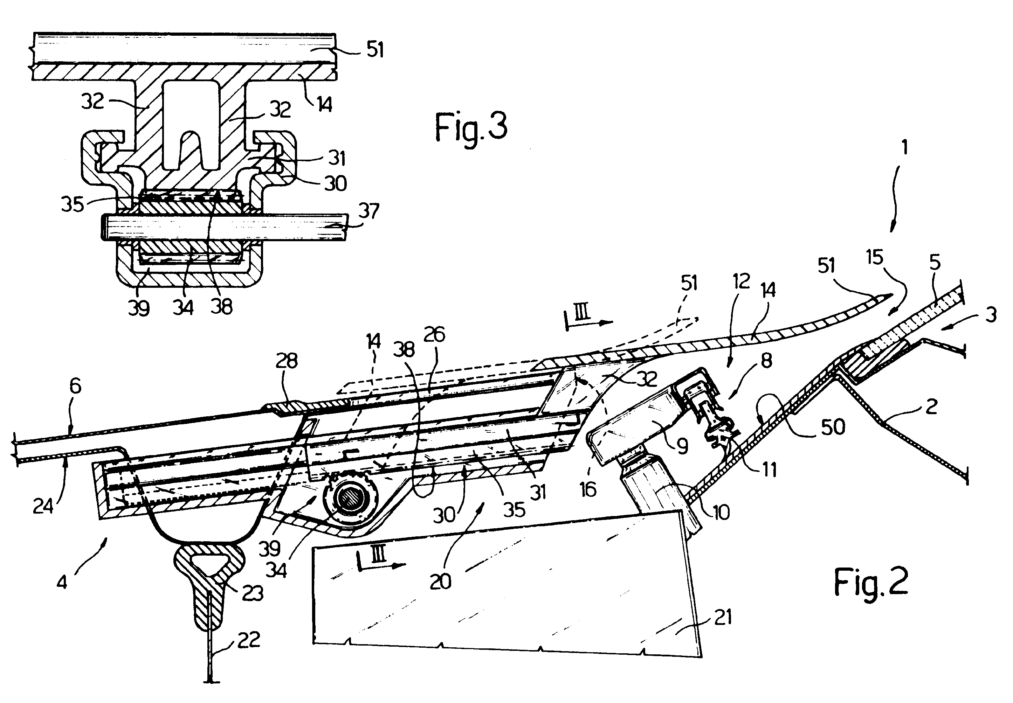

According to the type of a vehicle known e.g. from EP-A-0 302 499 to which the invention relates, the windscreen wiper 8 is mounted in a compartment 12 provided in the vehicle body 2 at the base of the windscreen 5, between this latter and the hood 6, and is shaped in such a manner as to completely house in its interior the windscreen wiper 8 when this is at rest (ie when in the position shown by full lines in Figures 1 and 2). According to the type of a vehicle known e.g. from EP-A-0 302 499 to which the invention relates, the vehicle 1 also comprises a sliding plate 14, preferably of synthetic plastics construction, carried by the hood 6 and shaped to cover both in plan and elevation the mouth 15 of the compartment 12 defined between the windscreen 5 and that transverse terminal edge 16 of the hood 6 which faces the windscreen 5 and is immediately adjacent to the compartment 12, and means for sliding the plate 14 along and parallel to the hood 6 between a first position shown by full lines in Figure 2 and in the left hand part of Figure 1, in which the plate 14 projects from the hood 6 to close the compartment 12 substantially flush with the hood 6 and such that the hood 6 substantially blends into the windscreen 5 so screening the windscreen wiper 8 both from the view of an observer eternal to the vehicle 1 and from the aerodynamic aspect, and a second position shown in dashed lines in Figure 2 and in full lines in the right hand part of Figure 1, in which the plate 14 is superposed on the hood 6 substantially to the side of the mouth 15, which thus remains uncovered to consequently expose the windscreen wiper 8 which, if operated by the motor 10, can move its wiper member 11 reciprocatingly across the windscreen 5 (as shown by dashed lines in Figure 1) to clean said windscreen 5.

According to a further characteristic of the type of a vehicle known, e.g. from EP-A-0 302 499 to which the invention relates, the compartment 12 forms part, without any discontinuity, of a larger compartment 20 which houses a known air intake port 21 for ventilation of the vehicle 1, and is provided in a position adjacent to the engine compartment 4, from which it is separated by a wall 22 provided with a gasket 23 on which the lower shaped face 24 of the hood 6 rests. The sliding plate 14 is supported by the hood 6 through respective air intake slots 25, 26 provided through the hood 6 transversely to the edge 16, and which are closed by the plate 14 when this is in said second position.

Specifically, the plate 14 is carried by the hood 6 on the outside of this latter opposite the lower face 24, and when in said second position covers the slots 25, 26 by overlying them, and possibly cooperates in an airtight manner with a gasket 28 carried on the outside of the hood 6 to prevent air seepage when the vehicle 1 is running, with consequent possible background noise generation. proper intake of the air required for ventilating the vehicle 1 through the port 21 is ensured by the fact that this latter can draw ambient air through either the slots 25, 26 or through the mouth 15 of the compartment 12. This is enabled by the fact that according to of the type of a vehicle, known e.g. from EP-A-0 302 499, to which the invention relates, the compartment 12 is an integral part of the larger compartment 20, because of which there is free air circulation between the two compartments. Consequently when the mouth 15 is closed by the plate 14, this latter projects from the edge 16 and leaves the slots 25, 26 open so that air is drawn into the compartment 20 through these. In contrast thereto, when the plate is retracted to uncover the windscreen wiper 8, it indeed closes the slots 25, 26 but also leaves open the mouth 15 so that the outside air is drawn into the compartment 20 through this latter and through the compartment 12, which represents that portion of the compartment 20 closest to the windscreen 5.

According to the illustrated non-limiting example, the means for sliding the plate 14 between said first and second position comprise respective C-shaped straight guides 30 fixed to the inner face 24 of the hood 6 and which slidingly guide respective T-shaped shoes 31 connected rigidly to the plate 14 by respective fins 32 which according to an embodiment of the invention are housed through the through air intake slots in the hood 6, and particularly through the slots 26, and at least one respective pinion 34 engaging with a rack 35 rigidly connected to at least one of the shoes 31.

Specifically, the hood 6 supports on the side comprising the face 24 four guides 30, of which two are lateral and two are central, these latter each being provided with a respective pinion 34. The pair of pinions 34 are driven by a common motor 36, such as an electric motor and also supported rigidly by the hood 6, the drive being for example via a transmission shaft 37 disposed transversely to the slots 25, 26. Each pinion engages with a respective rack 35 formed integrally with a respective shoe 31 on the lower surface 38 thereof, the pinions 34 being housed in respective lower recesses 39 in the two central guides 30.

According to the preferred embodiment of the invention, the slots 25 are defined by respective elongated holes having their opposing ends 40 rounded and closed, whereas the slots 26 which internally house the support fins 32 for the plate 14 are defined by elongated holes which are open at the edge 16. As already stated, the windscreen wiper 8 used in the vehicle 1 of the type known, e.g. from EP-A-0302499 and to which the invention relates is structurally of known type and at most can differ from those mounted on known vehicles in that the motor 10, or rather the known mechanism, not shown for simplicity, for transmitting motion from the motor to the arm 9, is regulated in such a manner that the arm undergoes a wider stroke than the maximum required for wiping the entire windscreen 5, in order to extend the end-of-travel positions of the wiper member 11 to within the compartment 12. In order to facilitate this extended movement of the windscreen wiper 8 the compartment 12 is provided, on the same side as the windscreen 5 to be wiped, with an oblique surface 50 disposed substantially as a prolongation of the windscreen 5 and blending into it, and arranged to receive the wiper member 11 when the windscreen wiper 8 is in its rest position, ie in both its opposing end-of-travel positions.

Finally, to obtain an improved aerodynamic blending between the windscreen 5 and the plate 14, this latter is provided with a curved frontal edge 51 which flares outwards from the compartment 12. Moreover, according to a possible modification, not shown for simplicity, the plate 14 can undergo not only the sliding movement along the slots 25, 26 but also a vertical translational/rotary movement (for example obtained by providing the guides 30 with suitable cam surfaces), so that when it is in said first position in which it closes the compartment 12 it can be aligned strictly flush with the outer surface of the hood 6 (instead of being offset by the extent of its own thickness as in the illustrated embodiment).

The operation of the windscreen wiper 8 in the described vehicle 1 is evident. When the windscreen wiper 8 is at rest, ie when not in use, it is completely housed within the compartment 12, and this is closed substantially in an airtight manner by the plate 14. Under such conditions the windscreen wiper 8 is invisible and the hood 6 blends perfectly, substantially without discontinuity, from both the stylistic and aerodynamic aspect, with the windscreen 5. A pleasing aesthetic effect is therefore obtained (which can be enhanced by painting the plate 14 the same colour as the vehicle body 2) together with a much better CX value than that obtainable with the same vehicle but without the plate 14. When the windscreen wiper 8 is to be operated, the operating command for this latter also operates the motor 36, which retracts the plate 14 to thus uncover the compartment 12 and free the windscreen wiper 8, the wiper member of which is thus free to slide on the windscreen 5 by sweeping reciprocatingly from the compartment 12 through the mouth 15. With the plate 14 in this position air change within the passenger compartment 3 is in any event ensured by the air entering the compartment 20 through the mouth 15, even if the slots 25, 26 are partially or completely covered by the plate 14. Thus even with the compartment 12 open, the plate 14 still screens the windscreen wiper 8 aerodynamically by means of its edge 51, so that the CX value for the vehicle remains good, although less good than when the compartment 12 is closed. When the windscreen wiper 8 stops, the plate is again moved by the motor 36 to cover the compartment 12.

## Claims

1. A vehicle (1) comprising a window wiper (8), a vehicle body (2) provided with a compartment (12) for housing said window wiper, said compartment being shaped to completely house in its interior said window wiper (8) when this is in its rest position and being provided at the base of a window (5) to be wiped by said window wiper and between said window (5) and a hood (6) of the vehicle; this latter also comprising a plate (14) carried by said hood (6) and shaped to reproduce the shape of a mouth (15) of said compartment (12), and means for sliding said plate (14) along said hood (6) between a first position, in which the plate (14) projects from said hood (6) to close said compartment (12) substantially flush with said hood and in such a manner as to connect without solution of continuity the hood (6) to said window (5) so screening the window wiper (8), and a second position in which said plate (14) lies on the hood (6) substantially on one side of the compartment (12) housing the window wiper (8); said compartment (12) for housing the window wiper being provided at the base of the vehicle window (5) and forming part, without any discontinuity, of a compartment (20) which houses an air intake port (21) for the vehicle ventilation and is provided in a position adjacent to the vehicle engine compartment (4); characterised in that said sliding plate (14) is supported by said hood (6) through respective air intake slots (25,26) which are formed through said hood (6) and are closed by said sliding plate (14) when this latter is in said second position in which it overlaps said hood (6); said port (21) being arranged to draw in ambient air either through said slots (25,26) or through said mouth (15) of the window wiper housing compartment (12), as required.

2. A vehicle (1) as claimed in claim 1, characterised in that said means for sliding the plate (14) between said first and second position comprise respective straight guides (30) which are fixed to a inner face (24) of the hood (6) and in which there are slidingly guided respective shoes (31) connected rigidly to the plate by respective fins (32) housed through said through air intake slots (25,26) in the hood, and at least one respective pinion (34) engaging a rack (35) connected rigidly to at least one of said shoes (31).

3. A vehicle (1) as claimed in claim 2, characterised by comprising a pair of pinions (34) driven by a common motor (36) via a transmission shaft (37) disposed transversely to said slots (25,26); each pinion engaging a respective rack (35) formed integrally with and on the lower surface of a respective said shoe (31), the pinions (34) being housed in respective lower recesses (39) in the guides (30).

4. A vehicle (1) as claimed in claim 2 or 3, characterised in that said hood (6) is provided with two sets of said slots (25,26) the slots of a first set (25) being defined by respective elongated holes bounded by closed ends (40), the slots of the second series (26) housing in their interior said support fins (32) for the sliding plates and being defined by elongated holes open at that edge (16) of said hood (6) which is immediately adjacent to said compartment (14) housing said window wiper (8).

5. A vehicle (1) as claimed in any one of the preceding claims, characterised in that, on that side adjacent to the window (5) to be wiped, said compartment (14) housing the window wiper (8) is provided with an oblique surface (50) disposed substantially as a prolongation of said window (5) and arranged to receive the wiper member (11) of the window wiper (8) when this latter is in its rest position.

## Patentansprüche

1. Fahrzeug (1), mit einem Scheibenwischer (8), aufweisend eine Karosserie (2), die mit einer Zwischenkammer (12) zum Aufnehmen des Scheibenwischers ausgestattet ist, wobei die Zwischenkammer so geformt ist, daß sie den Scheibenwischer (8), wenn dieser in seiner Ruhestellung ist, vollständig in ihrem Inneren aufnimmt und sie an der Basis des durch den Scheibenwischer zu reinigenden Fensters (5) zwischen diesem Fenster (5) und einer Motorhaube (6) des Fahrzeugs angeordnet ist; wobei die Motorhaube weiterhin eine Platte (14), die durch die Motorhaube (6) abgestützt ist und die so geformt ist, daß sie die Kontur einer Öffnung (15) der Kammer (12) nachbildet, und Mittel zum Verschieben der Platte (14) entlang der Motorhaube (6) zwischen einer ersten Stellung aufweist, bei der die Platte (14) über die Motorhaube (6) übersteht, um die Kammer (12) im wesentlichen bündig mit der Motorhaube (6) in der Weise zu verschließen, daß die Motorhaube (6) ohne Auflösung der Kontinuität mit dem Fenster (5) verbunden ist, wodurch der Scheibenwischer (8) abgeschirmt ist, und einer zweiten Stellung, bei der die Platte (14) im wesentlichen an einer Seite der Kammer (12), die den Scheibenwischer (8) aufnimmt, an der Motorhaube (6) anliegt; wobei die Kammer (12) zum Aufnehmen des Scheibenwischers an der Basis des Fensters (5) des Fahrzeugs vorgesehen ist und übergangslos einen Teil eines Hohlraums (20) bildet, der eine Lufteinlaß-Öffnung (21) zur Belüftung des Fahrzeugs aufnimmt und der an einer Stelle angrenzend an den Motorraum (4) des Fahrzeugs angeordnet ist; dadurch gekennzeichnet, daß die verschiebbare Platte (14) auf der Motorhaube (6) durch die jeweiligen Lufteinlaß-Schlitze (25, 26) hindurch abgestützt ist, die in der Motorhaube (6) ausgebildet sind und die durch die verschiebbare Platte (14) verschlossen werden, wenn letztere in der zweiten Stellung ist, in der sie die Motorhaube (6) überdeckt, daß die Öffnung (21) so angeordnet ist, daß sie, je nach Erfordernis, die Umgebungsluft entweder durch die Schlitze (25, 26) oder durch die Öffnung (15) der den Scheibenwischer aufnehmenden Kammer (12) ansaugt.

2. Fahrzeug (1) nach Anspruch 1, dadurch gekennzeichnet, daß die Mittel zum Verschieben der Platte (14) zwischen der ersten und der zweiten Stellung Längsführungen (30), die auf einer inneren Fläche (24) der Motorhaube (6) befestigt sind, und in denen jeweils Führungsschlitten (31) gleitend geführt sind, die mit der Platte durch jeweilige Stege (32) starr verbunden sind, die durch Lufteinlaß-Schlitze (25, 26) in der Haube geführt sind, und mindestens jeweils ein Ritzel (34) aufweisen, das mit einer Zahnstange (35) im Eingriff steht, das mit mindestens einem der Führungsschlitten (31) starr verbunden ist.

3. Fahrzeug (1), nach Anspruch 2, dadurch gekennzeichnet, daß es ein Paar Ritzel (34) aufweist, die durch einen gemeinsamen Motor (36) über eine Transmissionswelle (37) angetrieben werden, die quer zu den Schlitzen (25, 26) angeordnet ist, wobei jedes Ritzel jeweils mit einer Zahnstange (35) im Eingriff steht, die integral mit und auf der unteren Oberfläche des jeweiligen Führungsschlittens (31) ausgebildet ist, wobei die Ritzel (34) in jeweiligen unteren Ausnehmungen (39) in den Führungen (30) aufgenommen sind.

4. Fahrzeug, nach Anspruch 2 oder 3, dadurch gekennzeichnet, daß die Motorhaube (6) zwei Gruppen von Schlitzen (25, 26) aufweist, wobei die Schlitze einer ersten Gruppe (25) jeweils durch langgestreckte Durchbrechungen definiert sind, die durch geschlossene Enden (40) begrenzt sind, und wobei die Schlitze der zweiten Gruppe (26) in ihrem Inneren die Stege (32) für die verschiebbare Platte aufnehmen und durch langgestreckte Durchbrechungen definiert sind, die an der Kante (16) der Motorhaube (6) offen sind, die unmittelbar an der Kammer (14) angrenzt, die den Scheibenwischer (8) aufnimmt.

5. Fahrzeug (1), nach irgendeinem der vorangehenden Ansprüche, dadurch gekennzeichnet, daß die Kammer (14), die den Scheibenwischer (8) aufnimmt, an der an das zu reinigende Fenster (5) angrenzenden Seite eine schräge Fläche (50) aufweist, die im wesentlichen als Verlängerung des Fensters (5) angeordnet ist, und die zum Abstützen des Wischerblatts (11) des Scheibenwischers (8) ausgelegt ist, wenn dieser in seiner Ruhestellung ist.

## Revendications

1. Véhicule (1) comprenant un essuie-glace (8), une carrosserie (2) équipée d'un compartiment (12) pour loger cet essuie-glace, ce compartiment étant formé pour que l'essuie-glace (8) se loge totalement à l'intérieur lorsque l'essuie-glace est dans sa position de repos, et étant prévu à la base d'une glace (5) à balayer par cet essuie-glace et entre cette glace (5) et un capot (6) du véhicule, ce dernier comprenant également une plaque (14) portée par le capot (6) et formée pour reproduire la forme d'une embouchure (15) de ce compartiment (12), et des moyens pour faire coulisser cette plaque (14) le long du capot (6) entre une première position, dans laquelle la plaque (14) se projette du capot (6) pour fermer le compartiment (12) en affleurant pratiquement le capot et de manière à raccorder, sans solution de continuité, le capot (6) à la glace (5) en masquant ainsi l'essuie-glace (8), et une deuxième position dans laquelle cette plaque (14) se trouve sur le capot (6) pratiquement sur un côté du compartiment (12) dans lequel est logé l'essuie-glace (8), ce compartiment (12) pour loger l'essuie-glace étant prévu au niveau de la base de la glace du véhicule (5) et faisant partie, sans aucune discontinuité, d'un compartiment (20) dans lequel se trouve un orifice de prise d'air (21) pour la ventilation du véhicule et qui est prévu dans une position adjacente au compartiment moteur du véhicule (4), caractérisé en ce que cette plaque coulissante (14) est supportée par le capot (6) à travers des fentes de prise d'air respectives (25,26) qui sont formées à travers le capot (6) et sont fermées dans la plaque coulissante (14) lorsque cette dernière est dans la deuxième position dans laquelle elle recouvre le capot (6), cet orifice (21) étant disposé pour que l'air ambiant soit aspiré, soit à travers ces fentes (25,26), soit à travers l'embouchure (15) du compartiment de logement de l'essuie-glace (12), selon les besoins.

2. Véhicule (1) selon la revendication 1, caractérisé en ce que les moyens pour faire coulisser la plaque (14) entre la première position et la deuxième position comprennent des guides rectilignes respectifs (30) qui sont fixés sur une face intérieure (24) du capot (6) et dans lesquels sont guidés à coulissement des patins respectifs (31) solidarisés de la plaque par des nervures respectives (32) logées à travers les fentes de prise d'air traversantes (25,26) dans le capot, et au moins un pignon respectif (34) engrenant avec une crémaillère (35) solidarisée d'au moins l'un des patins (31).

3. Véhicule (1) selon la revendication 2, caractérisé en ce qu'il comprend deux pignons (34) entraînés par un moteur commun (36) par l'intermédiaire d'un arbre de transmission (37) disposé en travers des fentes (25,26), chaque pignon engrenant avec une crémaillère respective (35) formée d'un seul tenant avec la surface inférieure d'un patin respectif (31), les pignons (34) étant logés dans des évidements inférieurs respectifs (39) dans les guides (30).

4. Véhicule (1) selon la revendication 2 ou la revendication 3, caractérisé en ce que le capot (6) présente deux jeux de fentes (25,26), les fentes d'un premier jeu (25) étant définies par des trous allongés respectifs délimités par des extrémités fermées (40), les fentes du deuxième jeu (26) recevant à l'intérieur les nervures (32) supportant les plaques coulissantes et étant définies par des trous allongés ouverts au niveau du bord (16) du capot (6), qui est immédiatement adjacent au compartiment (12) dans lequel est logé l'essuie-glace (8).

5. Véhicule (1) selon l'une quelconque des revendications précédentes, caractérisé en ce que, sur le côté adjacent à la glace (5) à essuyer, le compartiment (12) contenant l'essuie-glace (8) comporte une surface oblique (50) disposée pratiquement dans le prolongement de la glace (5) et agencée pour recevoir le balai (11) de l'essuie-glace (8) lorsque ce dernier est dans sa position de repos.
